# EUROPÄISCHE PATENTSCHRIFT

(11) **EP 3 147 006 B1**
(45) Veröffentlichungstag und Bekanntmachung des Hinweises auf die Patenterteilung: **13.11.2019**
(21) Anmeldenummer: 16192557.3
(22) Anmeldetag: 06.08.2015
(51) Int. Cl.: A63G 31/16, A63G 7/00

(54) **VERFAHREN ZUM BETREIBEN EINER VORRICHTUNG, INSBESONDERE EINES FAHRGESCHÄFTES, EINES TRANSPORTMITTELS, EINES FITNESSGERÄTES ODER DERGLEICHEN**
METHOD FOR OPERATING A DEVICE, IN PARTICULAR OF A RIDE, A TRANSPORT MEANS, FITNESS EQUIPMENT OR THE LIKE
PROCÉDÉ D'EXPLOITATION D'UN DISPOSITIF, EN PARTICULIER D'UNE ATTRACTION, D'UN MOYEN DE TRANSPORT, D'UN APPAREIL DE FITNESS OU SIMILAIRE

(30) Priorität: 11.08.2014 DE 102014111386; 22.01.2015 DE 102015100943
(43) Veröffentlichungstag der Anmeldung: 29.03.2017
(62) Teilanmeldung aus: 15745513.0
(73) Patentinhaber: VR Coaster GmbH & Co. KG, 67663 Kaiserslautern (DE)
(72) Erfinder: Wagner, Thomas, 67691 Hochspeyer (DE)
(74) Vertreter: Westphal, Mussgnug & Partner Patentanwälte mbB

(56) Entgegenhaltungen:
- EP-A1- 2 138 213
- CN-Y- 200 983 877
- JP-A- 2001 062 154
- US-A- 6 079 982
- US-A1- 2010 079 356
- US-A1- 2013 032 053
- US-B1- 6 179 619

## Beschreibung

Die Erfindung betrifft ein Verfahren zum Betreiben einer Vorrichtung, insbesondere eines Fahrgeschäftes, insbesondere Achterbahn, mit wenigstens einem entlang einer Fahrstrecke sich bewegenden und wenigstens einen Fahrgast aufnehmenden Fahrzeug. Ferner betrifft die Erfindung ein Fahrgeschäft, insbesondere eine Achterbahn zur Durchführung des erfindungsgemäßen Verfahrens. Die Erfindung betrifft auch das Betreiben von Transportmitteln, wie Autos, Zügen oder Flugzeugen oder auch Fitnessgeräten.

Ein gattungsbildendes Verfahren ist aus der EP 2 138 213 B1 bekannt, bei dem eine virtuelle Realität einer Fahrt mit einer Achterbahn auf einer von einem Fahrgast aufzusetzenden Brille bzw. einem Head-mounted Display abgebildet wird. Das Bild der optischen Realität im aktuellen Sehfeld des Fahrgastes wird mittels des Head-mounted Displays durch die stereoskopische Darstellung einer virtuellen Realität ersetzt. Dabei wird die Darstellung der virtuellen Realität in Abhängigkeit von Position und /oder Ausrichtung des Head-mounted Displays synchron zur Kopfbewegung in Echtzeit angepasst. Auch kann die optische Realität von einer Kamera aufgenommen werden und in der Darstellung des Head-mounted Displays durch Einspielen von Augmented-Reality-Effekten erweitert werden. Ferner umfasst bei diesem bekannten Verfahren das Fahrgeschäft einen Positionssensor zur Positionsermittlung des Fahrzeugs entlang der Fahrstrecke, so dass in Abhängigkeit von der Position des Fahrzeugs entlang der Strecke die virtuelle Realität erzeugt und mit dem Head-mounted Display dargestellt werden kann.

Die JP 2001 062 154 A beschreibt einen von einem Fahrgast einer Achterbahn während der Fahrt zu tragenden Helm mit einer Brille und einem Kopfhörer als Head-mounted Display zur Darstellung von Bild- und Audioinformationen. In diese Brille wird eine virtuelle Realität eingeblendet und die zugehörigen Audioinformationen über den Kopfhörer erzeugt. Hierzu können unterschiedliche Bild- und Audioinformationen von dem Fahrgast ausgewählt werden.

Bei diesen bekannten Fahrgeschäften, bei dem der Fahrgast ein Head-mounted Display während der Fahrt trägt und auf dem eine mit der Fahrt synchronisierte virtuelle Realität der Fahrt, bspw. der Achterbahnfahrt dem Fahrgast angezeigt wird, muss das Head-mounted Display stets mit einer in dem Fahrgeschäft integrierten Datenverarbeitungsanlage verbunden sein. Dabei ist beim Einsatz von solchen Head-mounted Displays aufgrund der individuellen Blickrichtungen der Fahrgäste eines Fahrgeschäftes für jeden Sitzplatz eine Datenverarbeitungsanlage erforderlich.

Solche Datenverarbeitungsanlagen können zum einen fest in einem Fahrzeug des Fahrgeschäftes montiert sein, wodurch sie jedoch permanent erheblichen Erschütterungen ausgesetzt sind. Zum anderen könnte eine Datenverarbeitungsanlage auch zentral in einem Rechenzentrum abseits des Fahrgeschäftes untergebracht sein, mit der Folge einer aufwändigen Übertragung der Positions- und Richtungsdaten der Head-mounted Displays zum Rechenzentrum sowie eine Rückübertragung der aufgrund dieser fahrgastspezifischen Daten erzeugten stereoskopischen Darstellungen in die Head-mounted Displays. Dies würde zu einem hohen technischen Aufwand führen und könnte insbesondere für ein immersives Erleben des Fahrgastes eine problematische Latenz erzeugen, die bei dem Fahrgast Schwindelgefühle und Übelkeit auslösen könnte.

Weiterhin ist in diesen bekannten Fahrgeschäften neben den vorgenannten Datenverarbeitungsanlagen auch für jeden Sitzplatz stets ein fest installiertes Head-mounted Dispay erforderlich.

Darüber hinaus müssen diese Head-mounted Displays tagtäglich von mehreren tausend Fahrgästen getragen werden, was eine erhebliche Herausforderung im Hinblick auf hygienischen Betrieb der Head-mounted Displays sowie deren Wartung und Instandhaltung darstellt.

Ein solches Fahrgeschäft ist z. B. aus US 6,179,619 B1 bekannt.

Der Erfindung liegt die Aufgabe zugrunde, das eingangs genannte Verfahren derart weiterzubilden, dass das Fahrgeschäft kostengünstig betrieben werden kann.

Diese Aufgabe wird gelöst durch ein Verfahren mit den Merkmalen des Patentanspruchs 1 und mit den Merkmalen des Patentanspruchs 4.

Dieses Verfahren zum Betreiben eines Fahrgeschäftes, insbesondere Achterbahn, mit wenigstens einem entlang einer Fahrstrecke sich bewegenden und wenigstens einen Fahrgast aufnehmenden Fahrzeug, bei dem mittels eines fahrgeschäftsspezifischen Computerprogramms eine einer Fahrt mit dem Fahrzeug entsprechende virtuelle Realität erzeugt und auf einer dem Fahrgast eines Fahrzeugs zugeordneten Head-mounted Displays in Abhängigkeit der Position des Fahrzeugs auf der Fahrstrecke sowie in Abhängigkeit der Position und/oder der Ausrichtung des Head-mounted Displays dargestellt wird, zeichnet sich gemäß der erstgenannten Lösung erfindungsgemäß dadurch aus, dass das fahrgeschäftsspezifische Computerprogramm auf einem eine Kommunikationsschnittstelle aufweisenden mobilen Endgerät des Fahrgastes ausgeführt wird.

Bei diesem erstgenannten erfindungsgemäßen Verfahren wird das persönliche mobile Endgerät des Fahrgastes benutzt, um das die virtuelle Realität erzeugende fahrgeschäftsspezifische Computerprogramm auszuführen. Es ist damit nicht mehr erforderlich, dass das Fahrgeschäft für jeden Fahrgast eine Hardware bereitstellt, mit der für jeden Fahrgast in Abhängigkeit der Position und Richtung von dessen Head-mounted Displays dessen eigene, also fahrgastindividuelle virtuelle Realität erzeugt wird. Dem Betreiber des Fahrgeschäftes bleibt damit die Investition einer solchen Hardware erspart, insbesondere reduzieren sich hierdurch Wartungs- und Instandhaltungsaufwand.

Als mobile Endgeräte des Fahrgastes können Mobilfunkgeräte, Mobiltelefone, insbesondere Smartphones, Tablet-Computer oder Laptops verwendet werden, mit denen das fahrgeschäftsspezifische Computerprogramm ausführbar ist. Solche mobilen Endgeräte des Fahrgastes können während der Fahrt, insbesondere der Achterbahnfahrt in den Taschen der Kleidung der Fahrgäste aufbewahrt werden und sind somit im Gegensatz zu fest in den Fahrzeugen des Fahrgeschäftes montierter Hardware vor anhaltenden Erschütterungen geschützt. Die mobilen Endgeräte können aber auch im Gehäuse eines Head-mounted Displays sitzen, wo sie, je nach Modell, auch als integrierte Darstellungsvorrichtung dienen können. Auch kann das mobile Endgerät fest in dem Head-mounted Display integriert sein.

Ein weiterer Vorteil ergibt sich auch dadurch, dass der Fahrgast sein eigenes Head-mounted Display oder Virtual-Reality-Headset zusammen mit seinem mobilen Endgerät verwenden kann. Damit wäre es auch nicht mehr erforderlich, dass an jedem Fahrgastsitz ein solches Head-mounted Display bereitgestellt werden müsste. Da solche Head-mounted Displays oder Virtual-Reality-Headsets als handelsübliches Zubehör zu Mobiltelefonen, wie Smartphones oder Tablet-Computer und Laptops erhältlich sind, könnte ein Fahrgeschäft, insbesondere eine Achterbahn auch ohne die Bereitstellung solcher Head-mounted Displays betrieben werden.

Durch den Einsatz der persönlichen mobilen Endgeräte und gegebenenfalls persönlicher Head-mounted Displays der Fahrgäste erübrigt sich ferner auch die Notwendigkeit, bei technischen Fortschritten in Bezug auf die erreichbare Qualität der virtuellen Umgebung sowie der Darstellung in den Head-mounted Displays das Fahrgeschäft mit neuer Ausrüstung auszustatten.

Nach einer vorteilhaften Ausgestaltung der Erfindung gemäß der erstgenannten Lösung wird die Position des Fahrzeugs auf der Fahrstrecke von einer Positionserfassungsvorrichtung mit einer Fahrzeugkommunikationsschnittstelle des Fahrzeugs erfasst und dem mobilen Endgerät über dessen Kommunikationsschnittstelle übermittelt. Diese Übermittlung der Positionsdaten kann kabellos oder mittels einer Kabelsteckverbindung erfolgen, wobei diese Kommunikationsschnittstelle des mobilen Endgerätes entsprechend ausgebildet ist. Zur kabellosen Datenübertragung kann die Kommunikationsschnittstelle bluetoothfähig oder WLAN-fähig ausgebildet werden.

Die Positionserfassungsvorrichtung des Fahrgeschäftes umfasst Sensoren zur optischen, induktiven oder mechanischen Erkennung der aktuellen Position des Fahrzeuges auf der Fahrstrecke. Aus diesen Sensordaten sowie den von dem fahrgeschäftsspezifischen Computerprogramm zur Verfügung gestellten Informationen hinsichtlich Beschaffenheit der Fahrstrecke des Fahrgeschäftes wird die Position eines Fahrzeugs des Fahrgeschäftes bestimmt.

Besonders vorteilhaft ist es gemäß einer weiteren Ausgestaltung der Erfindung gemäß der erstgenannten Lösung, wenn zur Erzeugung einer der Fahrt mit dem Fahrzeug entsprechenden virtuellen Realität mittels des fahrgeschäftsspezifischen Computerprogramms dasselbe über eine Datenverarbeitungsvorrichtung des Fahrgeschäftes an die Kommunikationsschnittstelle des mobilen Endgerätes des Fahrgastes übertragen wird. Auch ist es möglich, dass das Computerprogramm von dem Betreiber des Fahrgeschäftes über einen App-Store-Server im Internet zur Übertragung bereitgestellt wird.

Damit enthält dieses fahrgeschäftsspezifische Computerprogramm auch die dieses Fahrgeschäft spezifisch betreffende Informationen, speziell Streckendaten, um die virtuelle Realität der Fahrt des Fahrgeschäftes in Bezug auf Fahrtrichtung und Fahrzeugneigung synchronisiert auf dem Head-mounted Display darzustellen. Insbesondere kann das erlebte Geschehen in der virtuellen Realität auf die vom Fahrgast gefühlten Kräfte und Fahrbewegungen hin angepasst inszeniert werden. Dabei kann die Fahrt durch vielfältige virtuelle Umgebungen immer wieder neu erlebt werden.Diese unterschiedlichen Versionen der virtuellen Realität der Fahrt des Fahrgeschäftes, bspw. eine Achterbahnfahrt können mit unterschiedlichen fahrgeschäftsspezifischen Computerprogrammen realisiert werden, die über die Datenverarbeitungsvorrichtung des Fahrgeschäftes an die Kommunikationsschnittstelle des mobilen Endgerätes des Fahrgastes übertragen werden können oder über einen App-Store-Server im Internet zur Übertragung bereitgestellt werden.

Die zweitgenannte Lösung zeichnet sich erfindungsgemäß dadurch aus, dass das fahrgeschäftsspezifische Computerprogramm auf einem mit dem Fahrzeug fest verbundenen Gerät ausgeführt wird, wobei das Gerät mit Anschlussmitteln zum Anschluss des Head-mounted Displays des Fahrgastes ausgebildet wird.

Bei dieser zweitgenannten Lösung ist das Gerät, bspw. eine Datenverarbeitungsanlage zur Ausführung des fahrgeschäftsspezifischen Computerprogramms, fest in dem Fahrzeug integriert und verfügt über standardisierte handelsübliche Anschlussmöglichkeiten, an denen der Fahrgast sein individuelles Head-mounted Display über eine Datenverbindung anschließen kann. Auf diese Weise erhält der Betreiber des Fahrgeschäftes eine direkte Kontrolle über die anwendbare Software, ohne die Vorteile der Nutzung von durch Fahrgäste mitgebrachte Hardware in Bezug auf Wartung und Hygiene zu verlieren. Außerdem benötigt der Fahrgast kein eigenes mobiles Endgerät, sondern nur ein handelsübliches Head-mounted Display, was beispielsweise auch direkt am Fahrgeschäft käuflich zu erwerben sein kann. Damit ist das Gerät in das Fahrzeug integriert und ständig mit der Positionserfassungsvorrichtung verbunden.

Alternativ zu der in dem Fahrzeug angeordneten Positionserfassungsvorrichtung ist es auch weiterbildungsgemäß möglich, dass die Position und der dynamische Zustand des Fahrzeugs auf der Fahrstrecke von einer Positions- und Zustandserfassungsvorrichtung des mobilen Endgerätes des Fahrgastes erfasst werden. Dies bietet sich an, da bereits mobile Endgeräte, wie bspw. Smartphones oder Tablet-Computer auf dem Markt sind, die mit einer Navigations-Funktion und Inertialsensoren ausgestattet sind, so dass auf der Basis bspw. eines in ein solches mobiles Endgerät eingebauten Gyroskops und Inklinometers eine Positionsbestimmung des Fahrzeugs in Bezug auf die Fahrstrecke des Fahrgeschäftes möglich ist. Eine solche Positions- und Zustandserfassungsvorrichtung des mobilen Endgerätes umfasst Sensoren, nämlich Rotationssensoren, Inklinometer oder Beschleunigungssensoren, Gyroskope oder Magnetometer sowie ein Positionsbestimmungssystem.

Nach einer bevorzugten Ausgestaltung der Erfindung wird zur Erzeugung der virtuellen Realität der Fahrt in Abhängigkeit der Position und/oder der Ausrichtung des Head-mounted Displays dasselbe mit Bewegungs- und Rotationssensoren, wie Inklinometer oder Beschleunigungssensoren, Gyroskopen und Magnetometer ausgebildet. Mit den erzeugten Sensordaten wird mittels des fahrgeschäftsspezifischen Computerprogramms die Position und Blickrichtung des Fahrgastes in dem virtuellen Raum errechnet und entsprechend in dem Head-mounted Display grafisch dargestellt.

Eine Kommunikationsschnittstelle des mobilen Endgerätes des Fahrgastes wird weiterbildungsgemäß WLAN-fähig oder bluetoothfähig ausgebildet.

Weiterhin ist es weiterbildungsgemäß vorgesehen, dass die Datenverbindung der Kommunikationsschnittstelle des mobilen Endgerätes des Fahrgastes mit der Kommunikationsschnittstelle des Fahrzeugs kabelgebunden ausgeführt wird.

Nach einer besonders vorteilhaften Ausgestaltung der Erfindung wird das Fahrzeug mit Eingabevorrichtungen zur Bedienung durch den Fahrgast ausgebildet, wobei die Betätigung der Eingabevorrichtung über die Kommunikationsschnittstelle an das mobile Endgerät übertragen wird. Damit werden nicht nur Daten an das mobile Endgerät des Fahrgastes übermittelt, sondern auch die Bedienungsdaten der Eingabevorrichtung von diesem an das fahrgeschäftsspezifische Computerprogramm gesendet. So wird bspw. die Betätigung von Knöpfen, Hebeln oder Joysticks der Eingabevorrichtung, die bspw. an Haltegriffen des Fahrgastsitzes angebracht sind, an das fahrgeschäftsspezifische Computerprogramm übermittelt. Hierauf wird in der virtuellen Realität entsprechend den Bediendaten eine bestimmte Aktion ausgelöst, d.h. der Fahrgast kann den Ablauf des Computerprogramms beeinflussen.

Vorzugsweise kann bei dieser Ausgestaltung des Fahrzeugs mit einer Eingabevorrichtung das Fahrzeug mit Force-Feedback-Vorrichtungen zur Vibration oder zur mechanischen Bewegung ausgebildet wird, deren Aktivierung durch das fahrgeschäftsspezifische Computerprogramm auf dem mobilen Endgerät mittels dessen Kommunikationsschnittstelle ausgelöst und gesteuert wird. Durch eine gesteuerte Bewegung der Haltegriffe könnte bspw. die spürbare Rückstoßbewegung einer virtuellen Bordkanone erzeugt werden oder der Fahrgastsitz könnte bei einer virtuellen Explosion zum Vibrieren gebracht werden.

Eine weitere vorteilhafte Ausgestaltung der Erfindung sieht vor, dass zusätzlich zur Position des Fahrzeugs auf der Fahrstrecke noch weitere Daten über den Zustand eines aus mehreren gekoppelten Fahrzeugen bestehenden Zuges oder anderer Fahrzeuge des Fahrgeschäftes, insbesondere über die Betätigung von Eingabevorrichtungen der anderen Fahrzeuge, an das mobile Endgerät über dessen Kommunikationsschnittstelle übermittelt werden.

Nach einer weiteren Ausgestaltung der Erfindung werden die von der Fahrzeugkommunikationsschnittstelle übertragenen Daten an mobile Endgeräte von weiteren Fahrgästen in anderen Fahrzeugen des Fahrgeschäftes übermittelt. Somit können mehrere mobile Endgeräte in mehreren Fahrzeugen mit einer einzigen Kommunikationsschnittstelle des Fahrzeugs kommunizieren.

Schließlich ist es weiterbildungsgemäß auch möglich, dass die Position und der dynamische Zustand des Fahrzeugs auf der Fahrstrecke des Fahrgeschäftes nicht von einer Positionserfassungsvorrichtung des Fahrzeugs, sondern von einer Kommunikationsschnittstelle der Datenverarbeitungsanlage des Fahrgeschäftes an das mobile Endgeräte des Fahrgastes übertragen wird.

Die Erfindung wird nachfolgend anhand von Ausführungsbeispielen unter Bezugnahme auf die beigefügten Figuren ausführlich beschrieben. Es zeigen:
Figur 1 ein Blockschaltbild eines Fahrgeschäftes, nämlich einer Achterbahn zur Erläuterung des erfindungsgemäßen Verfahrens, und
Figur 2 eine perspektivische Darstellung eines Fahrzeugs mit einem Fahrgast eines Fahrgeschäftes gemäß Figur 1.

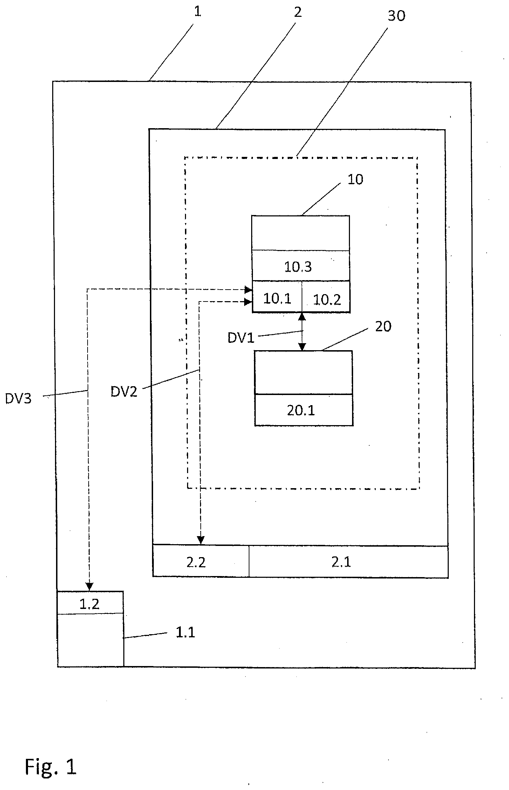

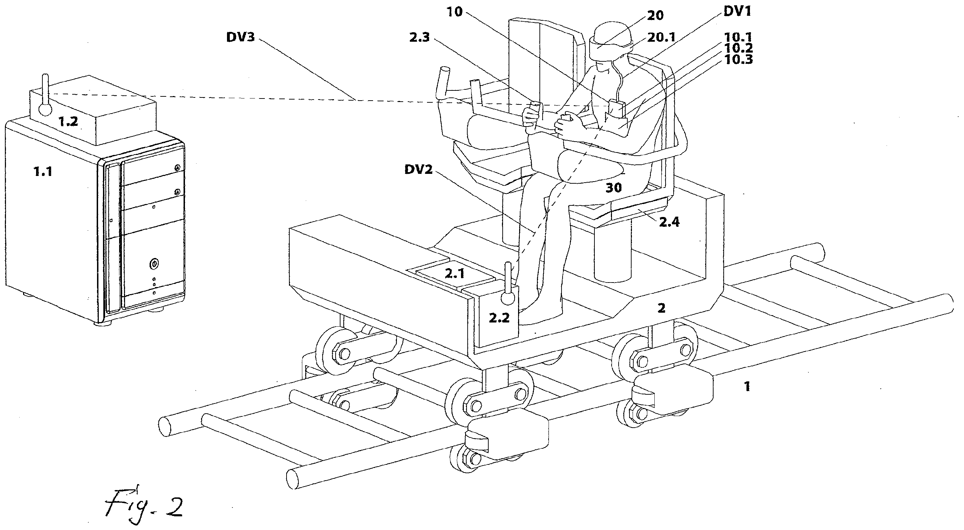

Die Figur 1 zeigt in einer stark schematisierten Darstellung als Fahrgeschäft eine Achterbahnanlage 1, auf der einzelne oder mehrere zu Zügen zusammengefasste Fahrzeuge 2 auf einem Schienensystem als Fahrstrecke fahren. Die Figur 2 zeigt den Aufbau eines solchen auf einer Fahrstrecke mit zwei Gleisen geführten Fahrzeugs 2 mit einem Fahrgast 30 in einer schematisierten Darstellung.

Der Fahrgast 30 in dem Fahrzeug 2 besitzt ein persönliches mobiles Endgerät 10 in Form eines Mobiltelefons, bspw. eines Smartphones oder in Form eines Tabletcomputers oder Laptops mit einer bluetoothfähigen oder WLAN-fähigen Kommunikationsschnittstelle 10.1, über die von einer Datenverarbeitungsvorrichtung 1.1 der Achterbahn 1 ein fahrgeschäftsspezifisches Computerprogramm übertragen und zur Ausführung auf eine Datenverarbeitungsanlage 10.2 des mobilen Endgerätes 10 geladen wird. Das Computerprogramm kann auch von einem App-Store-Server im Internet aus übertragen werden.

Dieses fahrgeschäftsspezifische Computerprogramm dient dazu, eine virtuelle Realität einer Fahrt mit der Achterbahn 1 zu erzeugen, die mittels eines Head-mounted Displays 20 des Fahrgastes 30 dargestellt wird. Mit einer solchen virtuellen Realität wird für den Fahrgast 30 die Illusion erzeugt, eine Achterbahnfahrt in einer an die Achterbahn 1 spezifisch angepassten Umgebung realitätsnah zu erleben. Dabei kann diese als virtuelle Realität erzeugte Umgebung der realen Umgebung der Achterbahn 1 entsprechen, die auch mit Augmented-Reality-Effekten ergänzt werden können, oder vollständig als künstliche Umgebung ausgestaltet sein kann.

Das Head-mounted Display 20 stellt ebenso wie das mobile Endgerät 10 eine persönliche Hardware des Fahrgastes 30 dar.

Die Erzeugung der virtuellen Realität mittels des fahrgeschäftsspezifischen Computerprogramms und dessen Darstellung in dem Head-mounted Display 20 wird mit dem Start des Fahrzeugs 2 der Achterbahn 1 synchronisiert. Um die Position und Blickrichtung des Fahrgastes in dem virtuellen Raum zu bestimmen, ist das Head-mounted Display 20 mit Bewegungs- und Rotationssensoren 20.1 ausgebildet, deren Sensorsignale über eine Datenverbindung DV1 der Datenverarbeitungsvorrichtung 10.2 des mobilen Endgerätes 10 übermittelt werden, die hieraus die fahrgastspezifische virtuelle Realität der Achterbahnfahrt erzeugt und zur Darstellung wieder zurück zum Head-mounted Display 20 sendet.

Je nach Modell des Head-mounted Displays 20 kann das mobile Endgerät 10 auch im Head-mounted Display 20 sitzen und dort direkt die erzeugte fahrgastspezifische virtuelle Realität darstellen, ohne dass die Darstellung erst an das Head-mounted Display 20 gesendet werden müsste.

Auch können in das mobile Endgerät 10 integrierte Bewegungs- und Rotationssensoren genutzt werden, um die Darstellung der fahrgastspezifischen virtuellen Realität zu erzeugen.

Ebenso kann das mobile Endgerät 10 fest in das Head-mounted Display 20 integriert sein.

Zur Synchronisierung der virtuellen Realität mit der Bewegung des Fahrzeugs 2 auf dem Schienensystem der Achterbahn 1 ist Kenntnis von dessen Position, also dessen Ort auf dem Schienensystem erforderlich. Hierzu weist das Fahrzeug 2 eine Positionserfassungsvorrichtung 2.1 auf, die auf einer optischen, induktiven oder mechanischen Basis die aktuelle Position des Fahrzeugs 2 auf dem Schienensystem der Achterbahn 1 bestimmt. Die Sensordaten dieser Positionserfassungsvorrichtung 2.1 werden über eine Kommunikationsschnittstelle 2.2 des Fahrzeugs 2 der Kommunikationsschnittstelle 10.1 des mobilen Endgerätes 10 übermittelt. Mittels dieser Positionsdaten wird von dem fahrgeschäftsspezifischen Computerprogramm auf der Basis der Kenntnis des Verlaufs des Schienensystems der Achterbahn 1 die fahrzeugspezifische und fahrgastspezifische virtuelle Realität erzeugt.

Die Datenverbindung DV2 zwischen den Kommunikationsschnittstelle 2.2 und 10.1 zur Übertragung der Positionsdaten des Fahrzeugs 2 kann kabellos oder mittels einer Kabelsteckverbindung realisiert werden. Eine kabellose Datenverbindung DV2 kann mittels einer Bluetooth-Verbindung oder einer WLAN-Verbindung realisiert werden.

Die jeweiligen Positionsdaten des Fahrzeugs 2 auf dem Schienensystem der Achterbahn 1 während der Achterbahnfahrt können auch direkt von dem mobilen Endgerät 10 des Fahrgastes 30 zur Verfügung gestellt werden, wenn dieses mit einer Positions- und Zustandserfassungsvorrichtung 10.3 ausgerüstet ist. Eine solche Positions- und Zustandserfassungsvorrichtung 10.3 zur Bestimmung der Position und des dynamischen Zustandes des Fahrzeugs 2 umfasst als Sensoren einen Inklinometer oder Beschleunigungssensor, ein Gyroskop, oder ein Magnetometer und ein globales Positionsbestimmungssystem. Aus den entsprechenden Sensorsignalen sowie der Kenntnis des Computerprogramms über die Beschaffenheit der Fahrstrecke der Achterbahn 1 wird die Position des Fahrzeugs 2 auf dem Schienensystem bestimmt.

Gemäß Figur 2 kann das Fahrzeug 2 auch eine Eingabevorrichtung 2.3 mit Knöpfen, Hebeln oder Joysticks aufweisen, die bspw. an Haltegriffen des Fahrgastsitzes angeordnet sein können und von dem Fahrgast 30 bedient werden können. Die Bedienungsdaten dieser Eingabevorrichtung 2.3 werden mittels der Datenverbindung DV2 über die Schnittstelle 10.1 an die Datenverarbeitungsanlage 10.2 des mobilen Endgerätes 10 des Fahrgastes 30 dem fahrgeschäftsspezifischen Computerprogramm zugeführt und dadurch in der virtuellen Realität eine bestimmte Aktion ausgelöst. Damit kann der Fahrgast 30 den Ablauf des fahrgeschäftsspezifischen Computerprogramms beeinflussen bzw. mit dem fahrgeschäftsspezifischen Computerprogramm interagieren. Bestimmte von dem Fahrgast 30 aufgrund dessen Bedienung der Eingabevorrichtung 2.3 ausgelöste Aktionen oder in dem fahrgeschäftsspezifischen Computerprogramm vorgesehene dramaturgische Elemente können zu einer Aktivierung einer Force-Feedback-Vorrichtung 2.4 des Fahrzeugs 2 führen. Hierzu überträgt die Datenverarbeitungsanlage 10.2 des mobilen Endgerätes 10 über die Datenverbindung DV2 entsprechende Steuersignale zur Steuerung der Force-Feedback-Vorrichtung 2.4 an die Kommunikationsschnittstelle 2.2. Somit kann durch eine gesteuerte Bewegung der Haltegriffe durch den Fahrgast 30 bspw. die spürbare Rückstoßbewegung einer virtuellen Bordkanone erzeugt oder der Fahrgastsitz kann bei einer virtuellen Explosion zum Vibrieren gebracht werden. Eine weitere bestimmte Aktion könnte auch darin bestehen, dass die Rotation eines drehbaren Fahrzeugs 2 durch das fahrgeschäftsspezifische Computerprogramm beeinflusst wird.

Die Möglichkeit, durch die fahrgeschäftsspezifischen Computerprogramme solche Force-Feedback-Vorrichtungen 2.4 an Haltegriffen oder am Fahrgastsitz anzusteuern, eröffnet eine rein softwaretechnische, und damit äußerst einfach und flexibel einsetzbare Erweiterung für Dramaturgie und Immersion.

Das Übermitteln der Betätigung von Knöpfen oder Joysticks an das fahrgeschäftsspezifische Computerprogramm eröffnet ebenfalls immense und dennoch rein softwaretechnisch und damit sehr einfach implementierbare Möglichkeiten zur interaktiven Erweiterung des Fahrterlebnisses, insbesondere in Verbindung mit der Force-Feedback-Vorrichtung 2.4.

Das fahrgeschäftsspezifische Computerprogramm der Achterbahn 1 wird über eine Kommunikationsschnittstelle 1.2 einer Datenverarbeitungsvorrichtung 1.1 der Achterbahn 1 über eine Datenverbindung DV3 an das mobile Endgerät 10 über dessen Kommunikationsschnittstelle 10.1 übermittelt. Dies kann über eine Bluetooth-Verbindung oder einer WLAN-Verbindung realisiert werden. Ferner ist es auch möglich, eine solche Übertragung des fahrgeschäftsspezifischen Computerprogramms über einen App-Store-Server im Internet anstelle von einem lokalen Server als Datenverarbeitungsvorrichtung 1.1 zu ermöglichen.

Das fahrgeschäftsspezifische Computerprogramm der Achterbahn 1 kann in unterschiedlichen Versionen dem Fahrgast 30 zur Verfügung gestellt werden und von ihm über die Datenverbindung DV3 auf seine mobiles Endgerät 10 heruntergeladen werden. Die Datenverbindung DV3 kann auch als Internet-Verbindung zu einem Server des Betreibers der Achterbahn 1 realisiert werden, so dass hierüber unterschiedliche Versionen und die Updates des fahrgeschäftsspezifischen Computerprogramms auf das mobile Endgerät 10 des Nutzers 30 heruntergeladen werden können. Dies kann auch über einen App-Store-Server im Internet realisiert werden.

Ist ein Fahrgast 30 im Besitz eines Smartphones oder Tablet-PCs als mobiles Endgerät 10 sowie eines Head-mounted Displays 20, kann er eine entsprechend ausgerüstete Achterbahn 1 nicht nur in der real beobachtbaren Form, sondern in beliebig vielen unterschiedlichen, virtuell erweiterten Varianten erleben. Hierzu muss lediglich das fahrgeschäftsspezifische Computerprogramm, also die Software mittels einer Datenverbindung DV3 oder einer Internetverbindung auf dem Smartphone 10 oder Tablet-PC 10 installiert oder aktualisiert werden.

Der Katalog an herunterladbaren virtuellen Neuinterpretationen einer Achterbahn 1 realisiert in einem jeweiligen neuen Computerprogramm kann dabei stetig erweitert werden und sorgt mit jedem "Update" immer wieder für neues Interesse seitens der Fahrgäste, die entsprechende Achterbahn 1 mit einer neuen Dramatisierung erneut zu erleben.

Da bereits ein handelsübliches "Smartphone" oder ein tragbarer Tablet-PC als mobiles Endgerät 10 vollkommen ausreicht, um die entsprechende Software, also das fahrgeschäftsspezifische Computerprogramm während der Fahrt auszuführen, ist es auch nicht mehr notwendig, für jeden Fahrgastsitz des Fahrzeugs 2 der Achterbahn 1 eine eigene Datenverarbeitungsanlage zu montieren oder in einem Rechenzentrum unterzubringen. Dies erspart erhebliche Anschaffungskosten sowie Wartungs- und Instandhaltungsaufwand.

Auch ist es bei einer solchen Achterbahn 1 nicht mehr nötig, an jedem Fahrgastsitz des Fahrzeugs 2 ein eigenes Head-mounted Display 20 anzubringen sowie dieses zu warten und in Stand zu halten, da diese Geräte ebenfalls als handelsübliches Zubehör zu Smartphones, Tablet-PCs oder Laptops erhältlich sind und von den Fahrgästen mitgeführt werden können.

Die datenverarbeitenden mobilen Endgeräte 10 (Smartphones, Tablet-PCs) können dabei während der Fahrt in den Taschen der Kleidung der Fahrgäste aufbewahrt werden und sind damit, anders als bei fest in den Wagen montierter Hardware, vor anhaltenden Erschütterungen geschützt.

Außerdem ergibt sich hieraus beim Verfolgen der Kopfbewegung des Fahrgastes 30 keine Latenz wie etwa bei zum Schutz vor Erschütterungen abseits der Bahn aufgestellten Rechnern, da hier das Head-mounted Display 20 direkt mit dem persönlichen Smartphone oder Tablet-PC als mobiles Endgerät 10 des Fahrgastes 30 verbunden bleiben kann. Lediglich die Position des Fahrzeugs 2 im dreidimensionalen Raum muss durch die Achterbahn 1 an die individuelle Hardware des Fahrgastes 30 übertragen werden, was jedoch selbst bei auftretenden Latenzen keinen Einfluss auf die kontinuierlich präzise verfolgte Blickrichtung des Head-mounted Displays 20 und damit die Immersion des Fahrgastes hat.

Weiterhin ist kein Fahrgast 30 gezwungen, ein Head-mounted Display 20 aufzusetzen, das bereits am gleichen Tag von mehreren tausend Fahrgästen zuvor getragen wurde, da jeder Fahrgast 30, der die virtuell erweiterte Fahrt erlebt, sein eigenes, persönliches Gerät nutzt.

Durch den Einsatz der persönlichen mobilen Hardware der Fahrgäste erübrigt sich ferner auch die Notwendigkeit, bei technischen Fortschritten in Bezug auf die erreichbare Qualität der virtuellen Umgebung sowie der Darstellung in den Head-mounted Displays die gesamte Anlage mit neuer Ausrüstung auszustatten.

Vielmehr ermöglicht ein für jedes handelsübliche mobile Betriebssystem und jede mobile Hardware individuell angepasste fahrgeschäftsspezifische Computerprogramm sowie Kommunikationsschnittstelle zur Achterbahn 1 ein individuell angepasstes Erlebnis, das jeweils optimal die verfügbaren Ressourcen der Hardware des Fahrgastes 30 ausnutzen kann.

Ein weiterer Vorteil besteht darin, dass auch bestehende Achterbahnen mit sehr geringem Aufwand zur Durchführung des erfindungsgemäßen Verfahrens nachgerüstet werden können, da lediglich ein System zum Erkennen der Zugposition auf der Bahn sowie eine Vorrichtung zur Verbindung mit den Smartphones oder Tablet-PCs als mobile Endgeräte 10 der Fahrgäste installiert werden muss, etwa mittels einer Bluetooth-Verbindung oder einer WLAN-Verbindung.

Bei dem Ausführungsbeispiel gemäß den Figuren 1 und 2 wird das fahrgeschäftsspezifische Computerprogramm auf einem mobilen Endgerät 10 des Fahrgastes 30 ausgeführt.

Alternativ ist es gemäß einem weiteren Ausführungsbeispiel möglich, das fahrgeschäftsspezifische Computerprogramm auf einem auf dem Fahrzeug 2 fest installierten Gerät, bspw. einer Datenverarbeitungsanlage ausführen zu lassen, so dass der Fahrgast 30 lediglich ein eigenes Head-mounted Display mit sich führen muss. Dieses Gerät zur Ausführung des fahrgeschäftsspezifischen Computerprogramms ist fest mit der Positionserfassungsvorrichtung 2.1 des Fahrzeugs 2 verbunden und verfügt über handelsübliche Anschlussmöglichkeiten, an denen der Fahrgast 30 sein individuelles Head-mounted Display 20 über eine Datenverbindung DV1 anschließen kann. Auf diese Weise erhält der Betreiber des Fahrgeschäftes 1 direkte Kontrolle über die anwendbare Software, ohne die Vorteile der Nutzung von durch Fahrgäste mitgebrachte Hardware in Bezug auf Wartung und Hygiene zu verlieren. Außerdem benötigt der Fahrgast 30 kein eigenes mobiles Endgerät, sondern nur ein handelsübliches Head-mounted Display 20, was beispielsweise auch direkt am Fahrgeschäft käuflich erworben sein könnte.

### Bezugszeichenliste

- 1: Fahrgeschäft, Achterbahn
- 1.1: Datenverarbeitungsvorrichtung des Fahrgeschäftes 1
- 1.2: Kommunikationsschnittstelle der Datenverarbeitungsvorrichtung 1.1

- 2: Fahrzeug des Fahrgeschäftes 1
- 2.1: Positionserfassungsvorrichtung des Fahrzeugs 2
- 2.2: Kommunikationsschnittstelle des Fahrzeugs 2
- 2.3: Eingabevorrichtung des Fahrzeugs 2 zur Bedienung durch den Fahrgast 30
- 2.4: Force-Feedback-Vorrichtungen des Fahrzeugs 2

- 10: Mobiles Endgerät eines Fahrgastes des Fahrgeschäftes 1
- 10.1: Kommunikationsschnittstelle des mobilen Endgerätes 10
- 10.2: Datenverarbeitungsanlage des mobilen Endgerätes 10
- 10.3: Positions- und Zustandserfassungsvorrichtung des mobilen Endgerätes 10

- 20: Head-mounted Display eines Fahrgastes des Fahrzeuggeschäftes 1
- 20.1: Bewegungs- und Rotationssensoren des Head-mounted Displays 20

- 30: Fahrgast

- DV1: Datenverbindung zwischen mobilen Endgerät 10 und Headmounted Display 20
- DV2: Datenverbindung zwischen der Kommunikationsschnittstelle 10.1 und der Kommunikationsschnittstelle 2.2
- DV3: Datenverbindung zwischen der Kommunikationsschnittstelle 1.3 und der Kommunikationsschnittstelle 10.1

Zudem besteht das Problem, dass bei fest installierten oder auch im Handschuhfach mitgeführten VR-Headsets wechselnde Fahrgäste stets ein Headset tragen müssten, das bereits von vielen, womöglich unbekannten Personen zuvor mit direktem Hautkontakt getragen wurde. Dies bedeutet einen erheblichen Aufwand in Bezug auf Reinigung und Desinfektion.

Stattet man die i.d.R. in einem Kraftfahrzeug bereits integrierte Geschwindigkeits- oder Zustandsmessung mit einer Datenverarbeitungsanlage und einer Schnittstelle (etwa einem Bluetooth-Sender) zur Verbindung mit mobilen VR-Geräten aus, so können über diese Verbindung kontinuierlich Zustände des Fahrzeuges (z.B. GPS-Position, Ausrichtung des Fahrzeuges, Geschwindigkeit des Fahrzeuges) an eine Anwendung ("VR-App") übertragen werden, die auf einem persönlichen mobilen VR-Gerät der mitfahrenden Person ausgeführt wird.

Diese Daten können in der VR-App zur entsprechend synchronisierten Fahrt durch eine virtuelle Landschaft sowie zur synchronen Darstellung der Ausrichtung des virtuellen Fahrzeuges in der simulierten Welt verwendet werden.

Da hierbei nur noch Zustandsdaten übertragen werden, müssn in den entsprechenden Fahrzeugen keine Datenverarbeitungsanlagen zur Darstellung virtueller Welten mehr integriert werden. Dadurch entfallen sowohl Anschaffungskosten für eine grafisch leistungsfähige Datenverarbeitungsanlage sowie für deren Wartung und Instandhaltung.

Auch ist durch dieses System das entsprechend ausgestattete Fahrzeug nicht mehr nur auf einige wenige Headset-Modelle festgelegt, sondern es kann mit jedem beliebigen mobilen VR-Gerät benutzt werden. Die Inhalte sowie die Darstellungsgualität sind somit nicht mehr abhängig von einer am Fahrzeug montierten Hardware oder etwaigen notwendigen Treiber-Updates.

Die jeweiligen VR-Apps können beispielsweise übers Internet bezogen werden. Diese sind dadurch jeweils individuell auf das jeweilige VR-Gerät optimiert und per Download mit weiteren VR-Anwendungen frei erweiterbar. Auch kann der Benutzer frei seine individuelle VR-App wählen und ist nicht auf die Apps beschränkt, die auf einer etwaigen fest montierten Datenverarbeitungsanlage vorab installiert wurden.

Auf diese Weise kann jeder Benutzer ein eigenes, persönliches VR-Gerät mit sich führen und in jedem entsprechend ausgestatteten Fahrzeug einsetzen. Dadurch kann ein eigenes privates Headset verwendet werden und man ist nicht gezwungen, eines zu verwenden, das bereits von vielen anderen Benutzern zuvor in Berührung gekommen ist oder womöglich nicht vollständig gereinigt und desinfiziert wurde.

Eine weitere Variante der Erfindung sieht die Anwendung bei Fitnessgeräte vor.

Es ist bekannt, Fitnessgeräte (wie etwa Laufbänder, Ergometer oder Treppensteiggeräte/Stepper), durch eine Datenverarbeitungsanlage (zur Darstellung virtueller Welten oder zur Wiedergabe von sphärischen VR-Videos) sowie durch ein VR-Headset zu erweitern, so dass die trainierende Person sich in einer anderen, womöglich motivierenderen Umgebung wiederfindet.

Hierzu muss das jeweilige Fitnessgerät mit einer Datenverarbeitungsanlage zur Darstellung der virtuellen Welten ausgerüstet werden, was einen erheblichen finanziellen Aufwand in Bezug auf Anschaffung sowie Wartung und Instandhaltung der Anlage bedeutet.

Darüber hinaus beschränkt sich die auf dieser Datenverarbeitungsanlage installierte VR-Software und deren Gerätetreiber die Auswahl der verwendbaren VR-Headsets stets auf die zum Zeitpunkt der Installation bekannten VR-Headsets. Sollen neuere Headsets unterstützt werden, muss ein Softwareupdate ausgeführt werden.

Auch limitiert die jeweilige Grafikleistung der Hardware der betreffenden Datenverarbeitungsanlage die Auswahl der verwendbaren Headsets. Sofern ein neues Headset auf den Markt kommt, das beispielsweise eine höhere Bildauflösung hat, muss zur Unterstützung dieses Gerätes u.U. die gesamte Anlage gegen eine grafisch leistungsfähigere Hardware getauscht werden.

Außerdem beschränkt die mit dem Fitnessgerät verbundene Datenverarbeitungsanlage die verfügbaren VR-Inhalte auf die jeweils installierte Software. Es ist für den Benutzer nicht möglich, individuelle bzw. mitgebrachte VR-Anwendungen auszuführen(die etwa im Internet verfügbar sein können), sofern diese nicht durch den Betreiber auf der fest installierten Datenverarbeitungsanlage zur Verfügung gestellt werden.

Zudem besteht das Problem, dass auf Grund der körperlichen Aktivität der Anwender das VR-Headset sehr viel Schweiß aufnimmt. Dadurch ist es äußerst schwierig, das jeweilige Headset hygienisch zu betreiben, insbesondere bei der Anwendung in Fitness-Studios mit hunderten Besuchern. Selbst beim permanenten Austausch des Headsets muss dieses stets aufwändig gereinigt und desinfiziert werden, was für größere Fitness-Studios nicht nur erheblichen Aufwand bedeutet, sondern zudem auch die Lebensdauer des Gehäusematerials beeinträchtigen kann.

Stattet man die i.d.R. in einem solchen Fitnessgerät bereits integrierte Geschwindigkeits- oder Zustandsmessung mit einer Datenverarbeitungsanlage und einer Schnittstelle (etwa einem Bluetooth-Sender) zur Verbindung mit mobilen VR-Geräten aus, so können über diese Verbindung kontinuierlich Zustände des Fitnessgerätes (z.B. Geschwindigkeit eines Laufbandes, Drehgeschwindigkeit eines Ergometer-Rades, Lage der Trittstufen eines Steppers oder Lage von Paddel und Sitzelement eines Rudergerätes) an eine Anwendung ("VR-App") übertragen werden, die auf einem persönlichen mobilen VR-Gerät der trainierenden Person ausgeführt wird.

Diese Daten können in der VR-App zur entsprechend synchronisierten Bewegung durch eine Landschaft sowie zur synchronen Darstellung eines virtuellen Körpers der trainierenden Person verwendet werden.

Da hierbei nur noch Zustandsdaten übertragen werden, müssen in den entsprechenden Fitnessgeräten keine Datenverarbeitungsanlagen zur Darstellung virtueller Welten mehr integriert werden. Dadurch entfallen sowohl Anschaffungskosten für eine grafisch leistungsfähige Datenverarbeitungsanlage sowie für deren Wartung und Instandhaltung.

Auch ist durch dieses System das entsprechend ausgestattete Fitnessgerät nicht mehr nur auf einige wenige Headset-Modelle festgelegt, sondern es kann mit jedem beliebigen mobilen VR-Gerät benutzt werden. Die Inhalte sowie die Darstellungsqualität sind somit nicht mehr abhängig von einer am Fitnessgerät montierten Hardware oder etwaigen notwendigen Treiber-Updates.

Die jeweiligen VR-Apps können beispielsweise übers Internet bezogen werden. Diese sind dadurch jeweils individuell auf das jeweilige VR-Gerät optimiert und per Download mit weiteren VR-Anwendungen frei erweiterbar. Auch kann der Benutzer frei seine individuelle VR-App wählen und ist nicht auf die Apps beschränkt, die auf einer etwaigen fest montierten Datenverarbeitungsanlage durch den Fitness-Studio-Betreiber vorab installiert wurden.

Auf diese Weise kann jeder Benutzer ein eigenes, persönliches VR-Gerät mit sich führen und in jedem entsprechend ausgestatteten Fitness-Gerät einsetzen. Dadurch kann die trainierende Person ihr eigenes privates Headset verwenden und ist nicht gezwungen, eines zu verwenden, das bereits mit dem Schweiß vieler anderer Benutzer zuvor in Berührung gekommen ist oder womöglich nicht vollständig gereinigt und desinfiziert wurde.

In einer vorteilhaften Ausgestaltung der Erfindung kann das jeweilige Fitnessgerät auch durch die bestehende Kommunikationsstelle durch Bedienung des mobilen VR-Gerätes gesteuert werden. Mobile VR-Headsets verfügen auf Grund der darin befindlichen Hardware über Eingabevorrichtungen, die durch den Anwender betätigt werden können, um bestimmte Funktionen zu kontrollieren, wie etwa die vorgegebene Geschwindigkeit eines Laufbandes. Auch kann die jeweilige VR-App automatisiert das Fitnessgerät steuern, etwa durch Anpassung des Ergometer-Widerstandes je nach Steigung oder Gefälle in der virtuellen Streckenführung.

### Bezugszeichenliste

- 1: Fahrgeschäft, Achterbahn
- 1.1: Datenverarbeitungsvorrichtung des Fahrgeschäftes 1
- 1.2: Kommunikationsschnittstelle der Datenverarbeitungsvorrichtung 1.1

- 2: Fahrzeug des Fahrgeschäftes 1
- 2.1: Positionserfassungsvorrichtung des Fahrzeugs 2
- 2.2: Kommunikationsschnittstelle des Fahrzeugs 2
- 2.3: Eingabevorrichtung des Fahrzeugs 2 zur Bedienung durch den Fahrgast 30
- 2.4: Force-Feedback-Vorrichtungen des Fahrzeugs 2

- 10: Mobiles Endgerät eines Fahrgastes des Fahrgeschäftes 1
- 10.1: Kommunikationsschnittstelle des mobilen Endgerätes 10
- 10.2: Datenverarbeitungsanlage des mobilen Endgerätes 10
- 10.3: Positions- und Zustandserfassungsvorrichtung des mobilen Endgerätes 10

- 20: Head-mounted Display eines Fahrgastes des Fahrzeuggeschäftes 1
- 20.1: Bewegungs- und Rotationssensoren des Head-mounted Displays 20

- 30: Fahrgast

- DV1: Datenverbindung zwischen mobilen Endgerät 10 und Headmounted Display 20
- DV2: Datenverbindung zwischen der Kommunikationsschnittstelle 10.1 und der Kommunikationsschnittstelle 2.2
- DV3: Datenverbindung zwischen der Kommunikationsschnittstelle 1.3 und der Kommunikationsschnittstelle 10.1

## Patentansprüche

1. Verfahren zum Betreiben eines Fahrgeschäftes (1), insbesondere Achterbahn, mit wenigstens einem entlang einer Fahrstrecke sich bewegenden und wenigstens einen Fahrgast (30) aufnehmenden Fahrzeug (2), bei dem mittels eines fahrgeschäftsspezifischen Computerprogramms eine einer Fahrt mit dem Fahrzeug (2) entsprechende virtuelle Realität erzeugt und auf einem dem Fahrgast (30) eines Fahrzeugs (2) zugeordneten Head-mounted Display (20) in Abhängigkeit der Position des Fahrzeugs (2) auf der Fahrstrecke sowie in Abhängigkeit der Position und/oder der Ausrichtung des Head-mounted Displays (20) dargestellt wird,
**dadurch gekennzeichnet, dass**
das fahrgeschäftsspezifische Computerprogramm auf einem eine Kommunikationsschnittstelle (10.1) aufweisenden mobilen Endgerät (10) des Fahrgastes (30) ausgeführt wird.

2. Verfahren nach Anspruch 1,
**dadurch gekennzeichnet, dass**
die Position des Fahrzeugs (2) auf der Fahrstrecke von einer Positionserfassungsvorrichtung (2.1) mit einer Fahrzeugkommunikationsschnittstelle (2.2) des Fahrzeugs (2) erfasst und dem mobilen Endgerät (10) über dessen Kommunikationsschnittstelle (10.1) übermittelt wird.

3. Verfahren nach Anspruch 1 oder 2,
**dadurch gekennzeichnet, dass** zur Erzeugung einer der Fahrt mit dem Fahrzeug (2) entsprechenden virtuellen Realität mittels des fahrgeschäftsspezifischen Computerprogramms dasselbe über eine Datenverarbeitungsvorrichtung (1.1) des Fahrgeschäftes (1) an die Kommunikationsschnittstelle (10.1) des mobilen Endgerätes (10) des Fahrgastes (30) übertragen wird.

4. Verfahren zum Betreiben eines Fahrgeschäftes (1), insbesondere Achterbahn, mit wenigstens einem entlang einer Fahrstrecke sich bewegenden und wenigstens einen Fahrgast(30) aufnehmenden Fahrzeug (2), bei dem mittels eines fahrgeschäftsspezifischen Computerprogramms eine einer Fahrt mit dem Fahrzeug (2) entsprechende virtuelle Realität erzeugt und auf einem dem Fahrgast (30) eines Fahrzeugs (2) zugeordneten Head-mounted Display (20) in Abhängigkeit der Position des Fahrzeugs (2) auf der Fahrstrecke sowie in Abhängigkeit der Position und/oder der Ausrichtung des Head-mounted Displays (20) dargestellt wird, wobei das fahrgeschäftsspezifische Computerprogramm auf einem mit dem Fahrzeug (2) fest verbunden Gerät ausgeführt wird, **dadurch gekennzeichnet, dass** das Gerät mit Anschlussmitteln zum Anschluss des Head-mounted Displays (20) des Fahrgastes (30), im Gebrauch, ausgebildet wird, und dass das Head-Mounted-Display (20) ein mobiles Head-Mounted-Display (20) ist, welches von dem Fahrgast individuell bereitstellbar und an das Gerät über eine Datenverbindung anschließbar ist.

5. Verfahren nach Anspruch 1, 2 oder 3, **dadurch gekennzeichnet, dass** die Position und der dynamische Zustand des Fahrzeugs (2) auf der Fahrstrecke von einer Positions- und Zustandserfassungsvorrichtung (10.3) des mobilen Endgerätes (10) des Fahrgastes erfasst wird.

6. Verfahren nach einem der vorhergehenden Ansprüche,
**dadurch gekennzeichnet, dass** zur Erzeugung der virtuellen Realität der Fahrt in Abhängigkeit der Position und/oder der Ausrichtung des Head-mounted Displays (20) dasselbe mit Bewegungs- und Rotationssensoren (20.1) ausgebildet wird.

7. Verfahren nach einem der Ansprüche 1 bis 3, **dadurch gekennzeichnet, dass** als mobiles Endgerät (10) des Fahrgastes ein Mobilfunkgerät, ein Mobiltelefon, insbesondere Smartphone oder ein Tabletcomputer oder ein Laptop-Computer verwendet wird, wobei das mobile Endgerät (10) zum Ausführen des fahrgeschäftsspezifischen Computerprogramms ausgebildet ist.

8. Verfahren nach einem der Ansprüche 1 bis 3 oder 7, **dadurch gekennzeichnet, dass** die Kommunikationsschnittstelle (10.1) des mobilen Endgerätes (10) des Fahrgastes WLAN-fähig oder bluetoothfähig ausgebildet wird.

9. Verfahren nach einem der Ansprüche 2, 3, 7 oder 8, **dadurch gekennzeichnet, dass** die Datenverbindung (DV2) der Kommunikationsschnittstelle (10.1) des mobilen Endgerätes (10) des Fahrgastes mit der Kommunikationsschnittstelle (2.2) des Fahrzeugs (2) kabelgebunden ausgeführt wird.

10. Verfahren nach einem der Ansprüche 1 bis 3 oder 7 bis 9, **dadurch gekennzeichnet, dass** das Fahrzeug (2) mit Eingabevorrichtungen (2.3) zur Bedienung durch den Fahrgast (30)ausgebildet wird, wobei die Betätigung der Eingabevorrichtung (2.3) über die Kommunikationsschnittstelle (10.1) an das mobile Endgerät (10) übertragen wird.

11. Verfahren nach einem der Ansprüche 1 bis 3 oder 7 bis 10, **dadurch gekennzeichnet, dass** das Fahrzeug (2) mit Force-Feedback-Vorrichtungen (2.4) zur Vibration oder zur mechanischen Bewegung ausgebildet wird, deren Aktivierung durch das fahrgeschäftsspezifische Computerprogramm auf dem mobilen Endgerät (10) mittels dessen Kommunikationsschnittstelle (10.1) ausgelöst und gesteuert wird.

12. Verfahren nach einem der Ansprüche 1 bis 3 oder 7 bis 11, **dadurch gekennzeichnet, dass** zusätzlich zur Position des Fahrzeugs (2) auf der Fahrstrecke noch weitere Daten über den Zustand eines aus mehreren gekoppelten Fahrzeugen bestehenden Zuges oder anderer Fahrzeuge des Fahrgeschäftes (1), insbesondere über die Betätigung von Eingabevorrichtungen (2.3) der anderen Fahrzeuge an das mobile Endgerät (10) über dessen Kommunikationsschnittstelle (10.1) übermittelt werden.

13. Verfahren nach einem der Ansprüche Ansprüche 2, 3 oder 7 bis 12, **dadurch gekennzeichnet, dass** die von der Fahrzeugkommunikationsschnittstelle (2.2) übertragenen Daten an mobile Endgeräte von weiteren Fahrgästen in anderen Fahrzeugen des Fahrgeschäftes (1) übermittelt werden.

14. Verfahren nach einem der Ansprüche Ansprüche 1 bis 3 oder 7 bis 13, **dadurch gekennzeichnet, dass** die Position und der dynamische Zustand des Fahrzeugs (2) auf der Fahrstrecke des Fahrgeschäftes (1) von einer Kommunikationsschnittstelle (1.2) der Datenverarbeitungsanlage (1.1) des Fahrgeschäftes (1) an das mobile Endgeräte (10) des Fahrgastes übertragen wird.

15. Fahrgeschäft, insbesondere Achterbahn zur Durchführung des Verfahrens nach einem der Ansprüche 1 bis 3 oder 7 bis 14, mit einem entlang einer Fahrstrecke sich bewegenden und wenigstens einen Fahrgast (30) aufnehmenden Fahrzeug (2), bei dem mittels eines fahrgeschäftsspezifischen Computerprogramms eine einer Fahrt mit dem Fahrzeug (2) entsprechende virtuelle Realität erzeugt und auf einem dem Fahrgast (30) eines Fahrzeugs (2) zugeordneten Head-mounted Dispay (20) in Abhängigkeit der Position des Fahrzeugs (2) auf der Fahrstrecke sowie in Abhängigkeit der Position und/oder der Ausrichtung des Head-mounted Displays (20) dargestellt wird, wobei das fahrgeschäftsspezifische Computerprogramm auf einem eine Kommunikationsschnittstelle (10.1) aufweisenden mobilen Endgerät (10) des Fahrgastes (30) ausgeführt wird.

## Claims

1. Method for operating a ride (1), in particular a rollercoaster, having at least one carriage (2) that moves along a track and accommodates at least one passenger (30), wherein a virtual reality corresponding to a ride in the carriage (2) is generated by means of a ride-specific computer program, and is displayed on a head-mounted display (20) assigned to the passenger (30) of a carriage (2) depending on the position of the carriage (2) on the track and depending on the position and/or the orientation of the head-mounted display (20),
**characterised in that**
the ride-specific computer program is run on a mobile terminal (10) of the passenger (30), said terminal having a communication interface (10.1).

2. Method according to claim 1,
**characterised in that**
the position of the carriage (2) on the track is detected by a position detection device (2.1) having a carriage communication interface (2.2) of the carriage (2) and is relayed to the mobile terminal (10) via its communication interface (10.1).

3. Method according to claim 1 or 2,
**characterised in that**, in order to generate a virtual reality corresponding to the ride in the carriage (2) by means of the ride-specific computer program, this is conveyed to the communication interface (10.1) of the mobile terminal (10) of the passenger (30) via a data processing device (1.1) of the ride (1).

4. Method for operating a ride (1), in particular a rollercoaster, having at least one carriage (2) that moves along a track and accommodates at least one passenger (30), wherein a virtual reality corresponding to a ride in the carriage (2) is generated by means of a ride-specific computer program, and is displayed on a head-mounted display (20) assigned to the passenger (30) of a carriage (2) depending on the position of the carriage (2) on the track and depending on the position and/or the orientation of the head-mounted display (20), wherein the ride-specific computer program is run on a device fixed to the vehicle (2),
**characterised in that**
the device is formed with connection means for connecting the head-mounted display (20) of the passenger (30), in use, and that the head-mounted display (20) is a mobile head-mounted display (20), which can be individually provided by the passenger and connected to the device via a data connection.

5. Method according to claim 1, 2 or 3,
**characterised in that** the position and the dynamic state of the carriage (2) on the track are detected by a position and state detection device (10.3) of the mobile terminal (10) of the passenger.

6. Method according to one of the preceding claims,
**characterised in that**
in order to generate the virtual reality of the ride depending on the position and/or the orientation of the head-mounted display (20), this is formed with movement and rotation sensors (20.1).

7. Method according to one of claims 1 to 3,
**characterised in that** a mobile radio device, a mobile telephone, in particular a smartphone or tablet computer or a laptop computer, is used as the mobile terminal (10) of the passenger, wherein the mobile terminal (10) is formed to run the ride-specific computer program.

8. Method according to one of claims 1 to 3 or 7,
**characterised in that** the communication interface (10.1) of the mobile terminal (10) of the passenger is formed to be capable of Wi-Fi or Bluetooth.

9. Method according to one of claims 2,3 ,7 or 8,
**characterised in that** the data link (DV2) of the communication interface (10.1) of the mobile terminal (10) of the passenger is designed to be connected to the communication interface (2.2) of the carriage (2) via a cable.

10. Method according to one of claims 1 to 3 or 7 to 9,
**characterised in that** the carriage (2) is formed with input devices (2.3) to be operated by the passenger (30), wherein the activation of the input device (2.3) is conveyed to the mobile terminal (10) via the communication interface (10.1).

11. Method according to one of claims 1 to 3 or 7 to 10,
**characterised in that** the carriage (2) is formed with force-feedback devices (2.4) for vibration or mechanical movement, the activation of which is triggered and controlled by the ride-specific computer program on the mobile terminal (10) by means of its communication interface (10.1).

12. Method according to one of claims 1 to 3 or 7 to 11,
**characterised in that**, in addition to the position of the carriage (2) on the track, further data about the state of the train consisting of several linked carriages or of other carriages on the ride (1), in particular about the activation of input devices (2.3) of the other carriages, is conveyed to the mobile terminal (10) via its communication interface (10.1).

13. Method according to one of claims 2, 3 or 7 to 12,
**characterised in that** the data conveyed by the carriage communication interface (2.2) is relayed to mobile terminals of other passengers in other carriages of the ride (1).

14. Method according to one of claims 1 to 3 or 7 to 13,
**characterised in that** the position and the dynamic state of the carriage (2) on the track of the ride (1) is conveyed to the mobile terminal (10) of the passenger by a communication interface (1.2) of the data processing system (1.1) of the ride (1).

15. Ride, in particular rollercoaster, for carrying out the method according to one of the preceding claims 1 to 3 or 7 to 14 having one carriage (2) that moves along a track and accommodates at least one passenger (30), wherein a virtual reality corresponding to a ride in the carriage (2) is generated by means of a ride-specific computer program, and is displayed on a head-mounted display (20) assigned to the passenger (30) of a carriage (2) depending on the position of the carriage (2) on the track and depending on the position and/or the orientation of the head-mounted display (20), wherein the ride-specific computer program is run on a mobile terminal (10) of the passenger (30), said terminal having a communication interface (10.1).

## Revendications

1. Procédé d'exploitation d'une attraction foraine (1), en particulier d'un grand huit, comprenant au moins un véhicule (2) se déplaçant le long d'une piste et recevant au moins un passager (30), selon lequel, au moyen d'un programme d'ordinateur spécifique à l'attraction foraine, on crée une réalité virtuelle correspondant à un trajet avec le véhicule (2), et on la représente sur un casque de visualisation (20) associé au passager (30) d'un véhicule (2), en fonction de la position du véhicule (2) sur la piste et de la position et/ou de l'orientation du casque de visualisation (20),
**caractérisé en ce que**
le programme d'ordinateur spécifique à l'attraction foraine est exécuté sur un appareil terminal mobile (10) du passager (30) comportant une interface de communication (10.1).

2. Procédé conforme à la revendication 1,
**caractérisé en ce que**
la position du véhicule (2) sur la piste est détectée par un dispositif de détection de position (2.1) comportant une interface de communication (2.2) du véhicule (2), et est transmise à l'appareil terminal mobile (10) par l'intermédiaire de son interface de communication (10.1).

3. Procédé conforme à la revendication 1 ou 2,
**caractérisé en ce que**,
pour permettre de créer une réalité virtuelle correspondant au trajet avec le véhicule (2), au moyen du programme d'ordinateur spécifique à l'attraction foraine, celui-ci est transmis par un dispositif de traitement de données (1.1) de l'attraction foraine (1) à l'interface de communication (10.1) de l'appareil terminal mobile (10) du passager (30).

4. Procédé d'exploitation d'une attraction foraine (1), en particulier d'un grand huit, comprenant au moins un véhicule (2) se déplaçant le long d'une piste et recevant au moins un passager (30), selon lequel, au moyen d'un programme d'ordinateur spécifique à l'attraction foraine, on crée une réalité virtuelle correspondant à un trajet avec le véhicule (2), et on la représente sur un casque de visualisation (20) associé au passager (30) d'un véhicule (2), en fonction de la position du véhicule (2) sur la piste et de la position et/ou de l'orientation du casque de visualisation (20), selon lequel le programme d'ordinateur spécifique à l'attraction foraine est exécuté sur un appareil fixé au véhicule (2),
**caractérisé en ce que**
l'appareil est réalisé avec des moyens de raccordement destinés à raccorder le casque de visualisation (20) du passager (30), pendant l'utilisation, et le casque de visualisation (20) est un casque de visualisation (20) mobile, qui peut être fourni de manière individuelle par le passager et est raccordable à l'appareil par l'intermédiaire d'une liaison de données.

5. Procédé conforme à la revendication 1, 2 ou 3,
**caractérisé en ce que**
la position et l'état dynamique du véhicule (2) sur la piste sont détectés par un dispositif de détection de position et d'état (10.3) de l'appareil terminal mobile (10) du passager.

6. Procédé conforme à l'une des revendications précédentes,
**caractérisé en ce que**
pour permettre de créer la réalité virtuelle du trajet en fonction de la position et/ou de l'orientation du casque de visualisation (20), celui-ci est réalisé avec des détecteurs de déplacement et de rotation (20.1).

7. Procédé conforme à l'une des revendications 1, 2 ou 3,
**caractérisé en ce que**
en tant qu'appareil terminal mobile (10) du passager on utilise un appareil radiotéléphonique mobile, un téléphone mobile, en particulier un Smartphone ou une tablette d'ordinateur, ou un ordinateur portable, l'appareil terminal mobile (10) étant réalisé pour mettre en œuvre le programme d'ordinateur spécifique à l'attraction foraine.

8. Procédé conforme à l'une des revendications 1 à 3, ou 7,
**caractérisé en ce que**
l'interface de communication (10.1) de l'appareil terminal mobile (10) du passager est WLAN-compatible ou Bluetooth compatible.

9. Procédé conforme à l'une des revendications 2, 3, 7 ou 8,
**caractérisé en ce que**
la liaison de données (DV2) de l'interface de communication (10.1) de l'appareil terminal mobile (10) du passager avec l'interface de communication (2.2) du véhicule (2) est réalisée par connexion filaire.

10. Procédé conforme à l'une des revendications 1 à 3 ou 7 à 9,
**caractérisé en ce que**
le véhicule (2) est équipé de dispositifs d'entrée (2.3) destinés à être actionnés par le passager (30), l'actionnement du dispositif d'entrée (2.3) étant transmis à l'appareil terminal mobile (10) par l'intermédiaire de l'interface de communication (10.1).

11. Procédé conforme à l'une des revendications 1 à 3 ou 7 à 10,
**caractérisé en ce que**
le véhicule (2) est équipé de dispositifs de réaction de force (2.4) pour permettre la vibration ou le déplacement mécanique dont l'activation est déclenchée et commandée par le programme d'ordinateur spécifique à l'attraction mobile sur l'appareil terminal mobile (10) au moyen de son interface de communication (10.1).

12. Procédé conforme à l'une des revendications 1 à 3 ou 7 à 11,
**caractérisé en ce que**
en plus de la position du véhicule (2) sur la piste d'autres données concernant l'état d'un train constitué par plusieurs véhicules couplés ou d'autres véhicules de l'attraction foraine (1), en particulier concernant l'actionnement de dispositifs d'entrée (2.3) des autres véhicules sont transmises à l'appareil terminal mobile (10) par l'intermédiaire de son interface de communication (10.1).

13. Procédé conforme à l'une des revendications 2, 3 ou 7 à 12,
**caractérisé en ce que**
les données transmises par l'interface de communication du véhicule (2.2) sont communiquées aux appareils terminaux mobiles d'autres passagers situés dans d'autres véhicules de l'attraction foraine (1).

14. Procédé conforme à l'une des revendications 1 à 3 ou 7 à 13,
**caractérisé en ce que**
la position et l'état dynamique du véhicule (2) sur la piste de l'attraction foraine (1) sont transmises à l'appareil terminal mobile (10) du passager par une interface de communication (1.2) de l'installation de traitement de données (1.1) de l'attraction foraine (1).

15. Attraction foraine, en particulier grand huit permettant la mise en œuvre du procédé conforme à l'une des revendications 1 à 3 ou 7 à 14, comprenant un véhicule (2) se déplaçant le long d'une piste et recevant au moins un passager (30), selon laquelle, au moyen d'un programme d'ordinateur spécifique à l'attraction foraine, on crée une réalité virtuelle correspondant à un trajet avec le véhicule (2), et on la représente sur un casque de visualisation (20) associé au passager (30) d'un véhicule (2), en fonction de la position du véhicule (2) sur la piste et de la position et/ou de l'orientation du casque de visualisation (20), le programme d'ordinateur spécifique à l'attraction foraine étant exécuté sur un appareil terminal mobile (10) du passager (30) comportant une interface de communication (10.1).
